(19) Europäisches Patentamt
European Patent Office
Office européen des brevets

(11) EP 2 574 520 A2

(12) EUROPÄISCHE PATENTANMELDUNG

(43) Veröffentlichungstag:
03.04.2013 Patentblatt 2013/14

(51) Int Cl.:
B62D 5/00 (2006.01)          H02P 29/02 (2006.01)
H02M 1/32 (2007.01)          B66F 9/00 (2006.01)

(21) Anmeldenummer: 12183133.3

(22) Anmeldetag: 05.09.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 28.09.2011  DE 102011114433
19.10.2011  DE 102011054620

(71) Anmelder: STILL GmbH
22113 Hamburg (DE)

(72) Erfinder: Bierhoff, Dr., Michael
22081 Hamburg (DE)

(74) Vertreter: Geirhos, Johann
Geirhos & Waller
Landshuter Allee 14
80637 München (DE)

(54) Flurförderzeug mit notbetriebsfähigem elektrischen Antrieb

(57) Bei einem Flurförderzeug mit zumindest einem elektrischen Antrieb einer Komponente des Flurförderzeugs (1), wobei der elektrische Antrieb einen Drehstrommotor (18) mit mindestens drei Statorwicklungen (26,29,32), die in dem Betrieb des Drehstrommotors (18) in Sternschaltung geschaltet und mindestens drei Phasen (25,28,31) zugeordnet sind, einen regelbaren Umrichter (17) für die Versorgung der Phasen (25,28,31) mit elektrischer Energie und eine Steuervorrichtung aufweist, ist ein Sternpunkt (34) der Statorwicklungen (26,29,32) mit einer Hilfs-Halbbrücke (33) verbunden und die Steuerung kann bei einem Ausfall oder Fehler in einer Phase (25,28,31) die verbleibenden Phasen (25,28,31) auch mithilfe der Hilfs-Halbbrücke (33) mit elektrischer Energie versorgen.

Fig. 3

EP 2 574 520 A2

**Beschreibung**

Die Erfindung betrifft ein Flurförderzeug mit zumindest einem elektrischen Antrieb einer Komponente des Flurförderzeugs. Insbesondere betrifft die Erfindung ein Flurförderzeug mit zumindest einem elektrischen Antrieb einer Komponente des Flurförderzeugs, wobei der elektrische Antrieb einen Drehstrommotor mit mindestens drei Statorwicklungen, die in dem Betrieb des Drehstrommotors in Sternschaltung geschaltet und mindestens drei Phasen zugeordnet sind, einen regelbaren Umrichter für die Versorgung der Phasen mit elektrischer Energie und eine Steuervorrichtung aufweist.

Bekannt sind elektrische Antriebe von Komponenten von Flurförderzeugen, die als Stellantrieb eingesetzt werden und bei denen durch eine Regelung die angetriebene Komponente in eine durch einen Sollwert vorgegebene Position bewegt werden soll. Für diese Stellantriebe ist oftmals gewünscht, dass eine große Sicherheit gegenüber Ausfall besteht und im Falle des Ausfalls oder Versagens des elektrischen Antriebs eine Notbetriebsfähigkeit erhalten bleibt.

Für solche elektrischen Antriebe werden in großem Umfang Drehstrommotoren und wegen des einfachen Aufbaus mit einem Kurzschlussläufer insbesondere Drehstrom-Asynchronmotoren eingesetzt. Dabei wird der Drehstrom-Asynchronmotor über einen Wechsel- oder Umrichter angesteuert und kann dadurch in einem großen Drehmoment- und Drehzahlbereich geregelt werden. Hierzu werden in einer häufig verwendeten Schaltung drei Statorwicklungen mit jeweils einem Anschluss in einer Sternschaltung in einem Potentialpunkt, dem Sternpunkt verbunden. Die anderen Anschlüsse der drei Statorwicklungen sind mit den drei geregelten Phasen des Umrichters verbunden. Der Umrichter erzeugt die drei Phasen, mit denen die Statorwicklungen gespeist werden, in üblicher Ausführungsform durch jeweils eine Halbbrücke, die mit je zwei Leistungshalbleitern ein Aufschalten der Plus- oder Minusspannung eines den Umrichter speisenden Gleichstromzwischenkreises auf eine Phase bzw. Statorwicklung ermöglicht. Ein übliches Verfahren der Ansteuerung ist etwa das Pulsweitenmodulationsverfahren, bei dem die Spannungen und Ströme der Phasen allein durch Ein-/Ausschalten und die Dauer der Schaltzeiten geregelt werden. Die Leistungshalbleiter werden daher auch als Spannungs- bzw. Stromventile bezeichnet.

Nachteilig an einer solchen Ansteuerung eines aus einem Drehstrommotor mit Sternschaltung bestehenden elektrischen Antriebs ist, dass bereits ein Ausfall eines Leistungshalbleiters in einer Halbbrücke zu einem Ausfall führen kann. Beispielsweise kann im Falle eines Transistors als Leistungshalbleiter der Transistor dauerhaft sperren oder dauerhaft kurzschließen. In einem solchen Fall entsteht in dem Drehstrommotor ein stark pulsierendes Moment, das zu Stoßbelastungen durch Momentstöße führt und schließlich oftmals zu Abschaltungen wegen Überströmen, die dadurch verursacht werden. In dem Fall, dass eine Halbbrücke einer Phase vollständig ausfällt, muss bei einer Sternschaltung der Phasenstrom der verbleibenden einen Phase genau dem negativen Wert der verbleibenden anderen Phase entsprechen. Dies bedeutet, dass diese Phasen nur noch genau gegeneinander arbeiten können und kein Drehfeld mehr erzeugen können. Ein Betrieb als Motor ist dann unter diesen Umständen nicht mehr möglich. Da die Leistungshalbleiter thermisch stark belastet werden, sind diese regelmäßig anfälligen Bauteile betrachtet in Bezug auf die Ausfallwahrscheinlichkeit und auf die Lebensdauer.

Ein beispielhafter Anwendungsfall für einen solchen elektrischen Antrieb ist die bei Flurförderzeugen, insbesondere Lagertechnikgeräten, aber auch Schubmaststaplern, eingesetzte elektrische Lenkung, bei der die Übertragung der Lenkbefehle zwischen einem Lenkgeber als Sollwertgeber, wie etwa einem Lenkrad, und einem gelenkten Rad über eine elektrische Signalleitung und nicht über eine mechanische Verbindung erfolgt. Bei diesen bekannten elektrischen Lenkungen wird durch eine Steuerung ein Lenkmotor angesteuert, der über ein Getriebe oder eine Kette auf eine Drehachse des gelenkten Rades einwirkt und dessen Einschlagwinkel durch Verdrehen des Rades bestimmt. Bei einem solchen Lenkantrieb ist eine hohe Zuverlässigkeit gegenüber einem Ausfall des Antriebs bzw. zumindest eine Notbetriebsfähigkeit erwünscht. Dies ist insbesondere in Hinblick auf die Betriebs- und Einsatzbedingungen von Flurförderzeugen wichtig. So ist etwa bei Lagertechnikgeräten, bei denen Personen zusammen mit einem Fahrstand angehoben werden, um Ware aus Regalen zu entnehmen, der Einsatz einer rein elektrischen Lenkung schon seit langem üblich, da eine mechanische Übertragung der Lenkbefehle nur schwer oder gar nicht zu verwirklichen ist. Lagertechnikgeräte werden auch auf oftmals engen Fahrwegen in den Lagerbereichen bewegt, bei denen nicht nur der Verlust der Lenkbarkeit während der Fahrt zu Problemen führen kann, sondern auch die Blockierung durch ein ausgefallenes Fahrzeug. Insofern ist ein Notbetrieb nicht nur bis zu einem sicheren Stillstand erwünscht, sondern möglichst auch, um das Fahrzeug noch in eine frei wählbaren Parkposition zu bewegen oder gar eine Arbeitsschicht regulär zu beenden. Ein weiteres Beispiel für einen elektrischen Antrieb, bei dem eine Notbetriebsfähigkeit wünschenswert ist, stellt der Pumpenantrieb für eine Arbeitshydraulik dar. So kann zwar mittels eines Ventils eine manuelle Ablassmöglichkeit für ein Hubgerüst vorgesehen werden, jedoch können bei Ausfall eines Pumpenantriebs eventuell Blockierungssituationen aufgrund Einstellungen einer Lastgabel mittels eines Schwenkantriebs oder Seitenhubs an einem Regal nicht beseitigt werden. Da bei Flurförderzeugen aufgrund des Einsatzes in Lagerbereichen kompakte Außenabmessungen erwünscht sind und durch die Bauweise mit hohem Eigengewicht und dadurch massiven Rahmen sowie eventuell Gegengewichten der Einbauraum knapp ist, sollen die elektrischen Antriebe ebenfalls sehr kompakt ausführbar sein.

Um die Betriebsfähigkeit eines aus einem Drehstrommotor bestehenden elektrischen Antriebs sicherzustellen, ist vorgeschlagen worden, den Leistungsteil des Umrichters und somit sämtliche Leistungshalbleiter der Halbbrücken in vollem Umfang redundant auszuführen. Hierzu müssen dann insgesamt 12 statt der sonst erforderlichen 6 Leistungshalbleiter inklusive der entsprechenden Treiberschaltungen in dem Umrichter verbaut werden.

Nachteilig an diesem Stand der Technik ist, dass dadurch erhebliche Mehrkosten entstehen, da gerade die teuren Bauteile alle doppelt vorgesehen werden müssen. Auch erfordern die Leistungshalbleiter mit den zusätzlichen Kühlvorrichtungen merklich zusätzlichen Einbauraum und müssen die redundant vorgesehenen Bauteile dennoch für sehr hohe Leistungen bzw. für eine solche Leistung ausgelegt werden, dass ein Bauteil allein die anfallenden Ströme und Spannungen verarbeiten kann, um einen Dominoeffekt zu vermeiden, durch den bei Ausfall eines Leistungshalbleiters der verbleibende Leistungshalbleiter so überlastet wird, dass dieser binnen kurzer Zeit ebenfalls ausfällt. Dadurch werden der Bedarf an Einbauraum und die Kosten zusätzlich vergrößert.

Die genannten Probleme treten grundsätzlich auch bei Drehstrommotoren auf, die für den Fahrantrieb von Flurförderzeugen eingesetzt werden, insbesondere da bei diesen sehr hohe Leistungen geregelt werden müssen und die Umrichter dadurch stark thermisch belastet sind.

Der vorliegenden Erfindung liegt die Aufgabe zugrunde, ein Flurförderzeug mit einem Drehstrommotor sowie ein Verfahren zum Betrieb eines solchen Flurförderzeugs zur Verfügung zu stellen, mit dem ein Notbetrieb entsprechend den besonderen Anforderungen des Betriebs eines Flurförderzeugs im Fall eines Ausfalls einer Phase ermöglicht wird.

Diese Aufgabe wird durch ein Flurförderzeug mit zumindest einem elektrischen Antrieb mit den Merkmalen des Patentanspruchs 1 sowie ein Verfahren zum Betrieb eines Flurförderzeugs mit zumindest einem elektrischen Antrieb mit den Merkmalen des Patentanspruchs 6 gelöst. Vorteilhafte Weiterbildungen der Erfindung werden in den Unteransprüchen angegeben.

Die Aufgabe wird erfindungsgemäß dadurch gelöst, dass bei einem Flurförderzeug mit zumindest einem elektrischen Antrieb einer Komponente des Flurförderzeugs, wobei der elektrische Antrieb einen Drehstrommotor mit mindestens drei Statorwicklungen, die in dem Betrieb des Drehstrommotors in Sternschaltung geschaltet und mindestens drei Phasen zugeordnet sind, einen regelbaren Umrichter für die Versorgung der Phasen mit elektrischer Energie und eine Steuervorrichtung aufweist, der Sternpunkt der Statorwicklungen mit einer Hilfs-Halbbrücke verbunden ist und die Steuerung bei einem Ausfall oder Fehler in einer Phase die verbleibenden Phasen auch mithilfe der Hilfs-Halbbrücke mit elektrischer Energie versorgen kann.

Die aus zwei Leistungshalbleitern bzw. Schaltventilen aufgebaute Hilfshalbleiterbrücke ist im regulären Betrieb, solange bei den übrigen Phasen des Drehstrommotors kein Fehler auftritt, in dem Schaltzustand "offen" und die Ansteuerung des Drehstrommotors erfolgt wie auf übliche Weise bei in Sternschaltung angeordneten Statorwicklungen. Sobald ein teilweiser oder vollständiger Ausfall einer Phase festgestellt wird, kann die Steuerung in einem alternativen Ansteuerverfahren auch die Schaltventile der Hilfshalbleiterbrücke ansteuern. Dadurch ist es beispielsweise bei einem dreiphasigen Aufbau mit drei Statorwicklungen möglich, bei Ausfall einer Phase, über die zweite Phase wieder ein Feld zu erzeugen, ohne dass zwangsläufig in der dritten Phase ein derart gegengerichtetes Feld entsteht, dass sich nur ein linearer bewegendes Magnetfeld bilden kann, ohne Drehfeld. Es ist dadurch möglich, ein konstantes Drehmoment in Höhe von 50 % des Nennwertes zu erzeugen bei gleichem maximalen Strombetrag in den Leistungshalbleitern. Ein möglicher Fehler, der zu einem Ausfall einer Phase führt, kann insbesondere ein Kurzschluss eines Leistungshalbleiters einer Halbbrücke des Umrichters sein, oder ein dauerhaftes Sperren des Leistungshalbleiters, der dann immer in der Schaltstellung "offen" ist. Ein Ausfall kann aber auch in der zugeordneten Statorwicklung begründet sein, wenn etwa die Wicklung unterbrochen wird und elektrisch nicht mehr leitet, oder aber auch wenn zwischen Leitungen der Wicklungen sich ein Kurzschluss bildet. Vorteilhaft wird bei der Erfindung im Vergleich zu einer in vollem Umfang redundanten Ausführung der Leistungshalbleiter und zugehörigen Schaltungen lediglich ein zusätzlicher Einbauraum von ca. 33 % für die Hilfs-Halbbrücke erforderlich. Entsprechend steigen auch nur die Kosten in demselben Umfang, obwohl ein Notbetrieb in vollem Umfang möglich ist.

Vorteilhafte weist der Drehstrommotor genau drei Phasen auf, die auf genau drei Statorwicklungen aufgeteilt sind.

Die Erfindung kann außer bei Drehstrommotoren mit genau drei Statorwicklungen auch im Falle von mehr als drei Phasen angewandt werden, solange diese im Normalbetrieb auf sternförmig geschaltete Statorwicklungen wirken. Dabei können die Statorwicklungen auch mehrpolig ausgeführt sein, so dass eine Phase auf zwei oder mehr Statorwicklungen wirkt, die über den Umfang des Drehstrommotors verteilt sind.

Vorteilhaft ist die Hilfs-Halbbrücke in den Umrichter integriert.

Dadurch lässt sich ein sehr kompakter Aufbau erreichen.

In einer günstigen Ausführungsform ist der elektrische Antrieb ein Lenkantrieb einer elektrischen Lenkung.

Insbesondere bei der elektrischen Lenkung eines Flurförderzeugs, bei der regelmäßig keine mechanische Verbindung zwischen Lenkbetätigung bzw. Lenkrad und gelenktem Rad besteht, ist die die Fähigkeit zum Notbetrieb besonders vorteilhaft. Vorteilhaft kann eine Blockade von Fahrwegen durch die oft sehr schweren Flurförderzeuge vermieden werden. Auch ist es besonders vorteilhaft, wenn ein Totalausfall des Flurförderzeugs zunächst vermieden werden kann und es noch möglich ist, einen gewissen Zeitraum, insbesondere eine Arbeitsschicht, wenn auch eventuell mit verringerter Leistung zu beenden, da Flurförderzeuge teure Spezialgeräte sind und zumeist nicht sofort Ersatz bereitsteht für ein ausgefallenes Flurförderzeug.

In vorteilhafte Weiterbildung der Erfindung ist der elektrische Antrieb ein Fahrantrieb des Flurförderzeugs.

Da zum Teil Flurförderzeuge nur ein einziges Antriebsrad aufweisen, ermöglicht dies noch ein Bewegen des Flurförderzeugs in dem Notbetrieb.

Die Aufgabe wird auch gelöst durch ein Verfahren zum Betrieb eines zuvor geschilderten Flurförderzeugs, bei dem bei einem Ausfall einer Phase, insbesondere einem Ausfall eines Leistungshalbleiters und/oder einer Statorwicklung, durch die Steuerung die Hilfs-Halbbrücke für einen Notbetrieb so angesteuert wird, dass sich ein Drehfeld bildet.

Dadurch ergeben sich die bereits zuvor geschilderten Vorteile. Insbesondere kann der Drehstrommotor noch als Motor wirken und eine Antriebsleistung abgeben.

In einer Ausgestaltung des Verfahrens kann der Drehstrommotor genau drei Phasen aufweisen, die auf genau drei Statorwicklungen aufgeteilt sind, und die Steuerung eine feldorientierte Regelung durchführen.

In einer vorteilhaften Weiterbildung des erfindungsgemäßen Verfahrens werden für die Durchführung der feldorientierte Regelung Ersatz-Basisraumzeiger benutzt, die aus der Bedingung einer über den Umfang konstanten Strombelegung der verbleibenden Statorwicklungen bestimmt werden.

Fällt eine der drei Phasen bzw. Halbbrücken vollständig aus, so kann durch die zusätzliche Ansteuerung der Hilfs-Halbbrücke weiterhin ein oberwellenfreier Strombelag über dem Umfang der Maschine erzeugt werden. Die verbliebenen Phasen können mit neuen Schaltkombinationen, die auch die Hilfs-Halbbrücke mit berücksichtigen, angesteuert werden. Von diesen Schaltzuständen entsprechen jeweils vier den verbliebenen Basis-Raumzeigern der nicht ausgefallenen Phasen. Mit einer angepassten Raumzeigermodulation kann ein überlagertes feldorientiertes Regelungsverfahren ungeändert weiter genutzt werden. Dadurch werden vorteilhaft Kosten und Aufwand verringert.

In einer Weiterbildung des erfindungsgemäßen Verfahrens entsprechen die Ersatz-Basisraumzeiger den vier Basis-Raumzeigern der verbliebenen noch funktionsfähigen Phasen, die jeweils um $\pi/6$ auf die Basisraumzeiger der ausgefallenen Phase hin gedreht sind.

Durch diese Drehung um 30° - verglichen mit den ursprünglichen Basis-Raumzeigern, die mit den jeweiligen verbliebenen, funktionierenden Phasen assoziiert waren - wird eine über dem Umfang konstante Strombelegung gewährleistet.

In dem Notbetrieb kann durch die Steuerung eine Regelung des Antriebs mit verringertem Drehmoment erfolgen und/oder der Notbetrieb durch die Steuerung nur zeitlich begrenzt für eine bestimmte Zeitdauer durchgeführt werden.

Gegebenenfalls kann die Hilfshalbleiterbrücke auch in Bezug auf die Dauerhaltbarkeit weniger standfest ausgelegt werden, da sie nur für den kurzfristigen Notbetrieb vorgesehen ist. Auch dadurch können zusätzlicher Bauraum und Kosten eingespart werden.

In besonders vorteilhafter Ausgestaltung des erfindungsgemäßen Verfahrens ist der elektrische Antrieb ein Lenkantrieb einer elektrischen Lenkung und in dem Notbetrieb erfolgt durch die Steuerung bei Stillstand des Flurförderzeugs keine Ansteuerung des Antriebs.

Da das größte Drehmoment bei der Lenkbewegung eines gelenkten Rads im Stillstand auftritt, kann dadurch der Notbetrieb, der nur mit einem verringertem Drehmoment möglich ist, über einen längeren Zeitraum ausgedehnt werden, eventuell auch bis zu einem Ende einer Arbeitsschicht.

In vorteilhafte Weiterbildung des Verfahrens ist der elektrische Antrieb ein Fahrantrieb des Flurförderzeugs und wird in dem Notbetrieb durch die Steuerung die Höchstgeschwindigkeit und/oder maximale Beschleunigung des Flurförderzeugs begrenzt.

Weitere Vorteile und Einzelheiten der Erfindung werden anhand des in den schematischen Figuren dargestellten Ausführungsbeispiels näher erläutert. Hierbei zeigt die

Fig. 1    schematisch in Seitenansicht ein erfindungsgemäßes Flurförderzeug mit einem als elektrische Lenkung ausgeführten elektrischen Antrieb,

Fig. 2    schematisch die elektrische Lenkung des Flurförderzeugs der Fig. 1,

Fig. 3    schematisch ein Schaltbild des elektrischen Antriebs der Fig. 1,

Fig. 4    schematisch ein Schaltbild des elektrischen Antriebs der Fig. 1 bei Ausfall der ersten Phase,

Fig. 5    schematisch eine Raumzeigerkombination für den Ausfall der ersten Phase,

Fig. 6    schematisch eine Raumzeigerkombination für den Ausfall der zweiten Phase und

Fig. 7    schematisch eine Raumzeigerkombination für den Ausfall der dritten Phase.

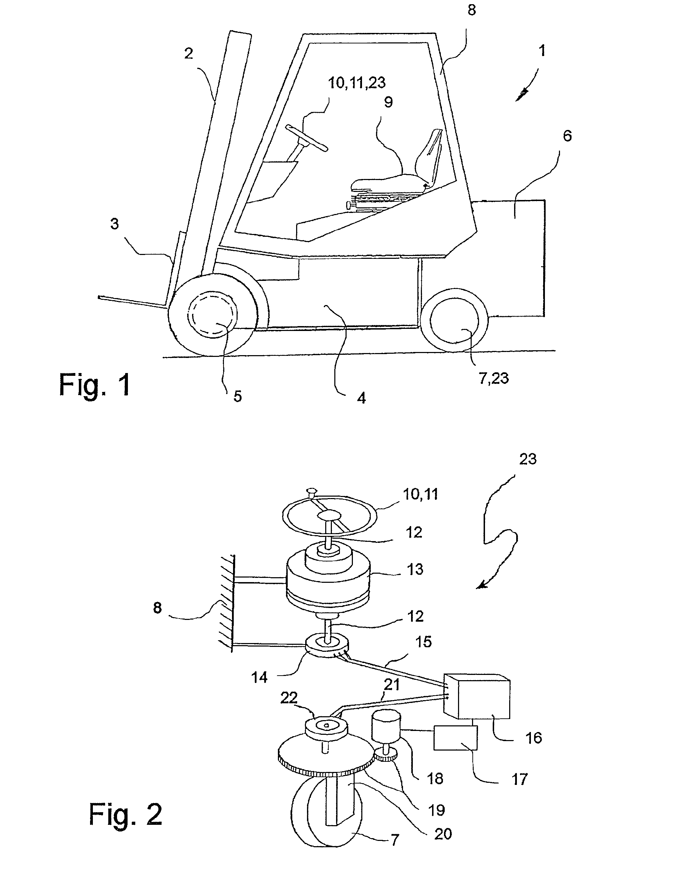

Die Fig. 1 zeigt schematisch in Seitenansicht ein als Gegengewichtsgabelstapler, ausgeführtes erfindungsgemäßes Flurförderzeug 1 mit einer elektrischen Lenkvorrichtung 23 als elektrischen Antrieb für eine Komponente der mobilen Arbeitsmaschine. An einem Hubgerüst 2 ist eine Lastgabel 3 angeordnet und an einem Rahmen 4 sind vordere Räder 5 sowie unterhalb eines Gegengewichts 6 mindestens ein gelenktes Rad 7 angeordnet, das mit einem elektrischen Antrieb zur Einstellung des Lenkeinschlags versehen ist. Die Erfindung kann sowohl bei Flurförderzeugen in 3-Rad-Bauweise, als auch bei Flurförderzeugen in 4-Rad-Bauweise eingesetzt werden. In einer Fahrerkabine 8 ist ein Fahrersitz 9 und vor diesem ein Sollwertgeber in Form eines Lenkgebers 10 für den elektrischen Antrieb der Lenkung angeordnet, hier in Form eines Lenkrades 11.

Die Fig. 2 zeigt schematisch den elektrischen Antrieb als erfindungsgemäße elektrische Lenkung 23 des Gegengewichtgabelstaplers aus der Fig. 1. Dargestellt ist der von dem Lenkrad 11 gebildete Lenkgeber 10, eine Lenkwelle 12, eine Lagerung 13 an der Fahrerkabine 8 und ein Lenkgebersensor 14 als Sollwertgeber. Der Lenkgebersensor 14 erfasst die Winkelstellung der Lenkwelle 12 und gibt ein entsprechendes Signal über eine Signalleitung 15 an eine Steuervorrichtung 16 ab. Die Steuervorrichtung 16 steuert einen Umrichter 17 an, der aus einem nicht dargestellten Gleichspannungszwischenkreis eine Eingangsspannung bezieht und die Statorwicklungen eines als Asynchron-Drehstrommotors ausgeführten Drehstrommotors 18 mit Strom versorgt, der von ebenfalls nicht dargestellten Statorstromsensoren gemessen wird. Der Drehstrommotor 18 verdreht über ein Getriebe 19, das von einem Zahnradgetriebe gebildet werden kann, das an einem Drehschemel 20 angeordnete gelenkte Rad 7. Als Getriebe 19 kann auch ein Kettengetriebe oder ein Riemengetriebe eingesetzt werden. Über eine weitere Signalleitung 21 ist die Steuervorrichtung 16 mit einem Lageistwertsensor 22 verbunden, der den Lenkeinschlag des gelenkten Rades 7 erfasst.

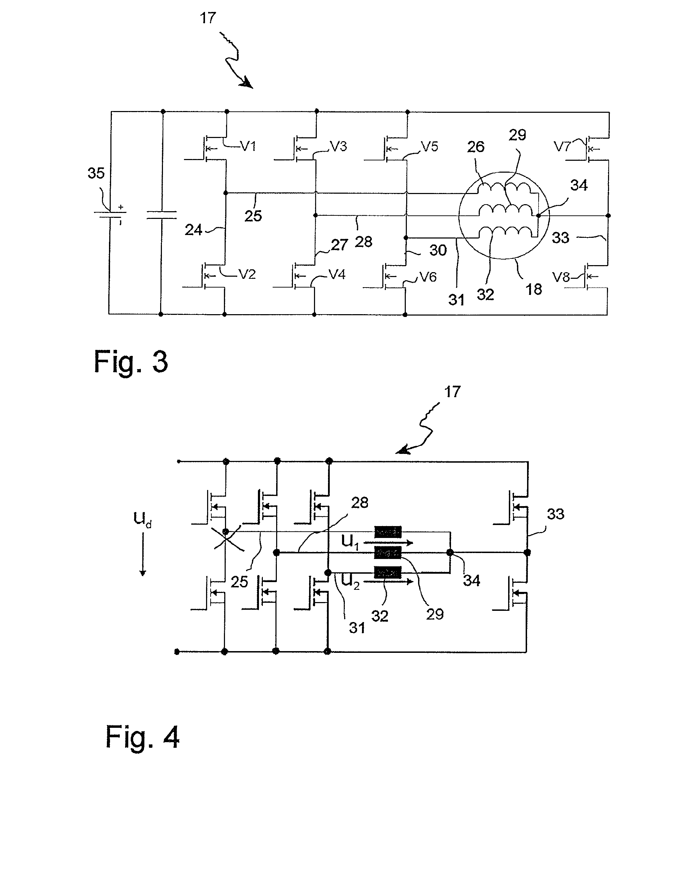

Die Fig. 3 zeigt schematisch ein Schaltbild des Umrichters 17 und Drehstrommotors 18 des elektrischen Antriebs der Fig. 1. Eine erste Halbbrücke 24 für die erste Phase 25 weist die auch als Stromventile bezeichneten Leistungshalbleiter V1 und V2 auf, mit denen auf die Statorwicklung 26 Plus- oder Minusspannung aus einer Traktionsbatterie 35 des Flurförderzeugs 1 geschaltet werden kann. Entsprechend schaltet eine zweite Halbbrücke 27 mit Leistungshalbleitern V3 und V4 eine zweite Phase 28 auf die zweite Statorwicklung 29 und eine dritte Halbbrücke 30 mit Leistungshalbleitern V5 und V6 eine dritte Phase 31 auf die dritte Statorwicklung 32. Eine Hilfs-Halbbrücke 33 mit Leistungshalbleitern V7 und V8 ist mit einem Sternpunkt 34 verbunden und kann diesen Sternpunkt 34 mit der Plus- oder Minusspannung aus der Traktionsbatterie 35 verbinden. Im normalen Betrieb sind die Leistungshalbleiter V7 und V8 der Hilfs-Halbbrücke 33 offen und der Umrichter 17 arbeitet auf herkömmliche Weise. Fig. 4 zeigt schematisch ein Schaltbild des Umrichters 17 des elektrischen Antriebs der Fig. 1 bei Ausfall der ersten Phase 25, wie durch die Durchstreichung angedeutet. Für die Ansteuerung der zweiten Statorwicklung 29 mit der Spannung U1 steht nunmehr noch die zweite Phase 28 und die Hilfs-Halbbrücke 33 sowie die die dritte Phase 31 über den Sternpunkt 34 zur Verfügung. Für die Ansteuerung der dritten Statorwicklung 32 mit der Spannung U2 steht nur noch die dritte Phase 31 und die Hilfs-Halbbrücke 33 sowie die die zweite Phase 28 über den Sternpunkt 34 zur Verfügung. Zusammen mit der Hilfs-Halbbrücke 33 und unter Mitzählung der ausgefallenen ersten Phase 25 wird dadurch ein Vierleitersystem gebildet. Durch die zusätzliche Beschaltung des Sternpunkts 34 bzw. Mittelpunktleiters über die Hilfs-Halbbrücke 33 kann auch im Notbetrieb weiterhin ein oberwellenfreien Strombelag über den Umfang des Drehstrommotors 18 bzw. der Drehfeldmaschine generiert werden. Als Reaktion auf den vollständigen Ausfall der ersten Phase 25 können nun die Strangspannungen U1 und U2 in den verbliebenen Statorwicklungen 29,32 entsprechend den verbliebenen Phasen 28,31 gemäß der nachfolgenden Tabelle mit neuen Schaltkombinationen, die auch die vierte Hilfs-Halbbrücke 33 mit berücksichtigen, erzeugt werden. Dabei ist $U_d$ die Gleichspannung des Zwischenkreises, mit der der Umrichter 17 gespeist wird, und die im vorliegenden Beispielsfall der Spannung der Traktionsbatterie 35 entspricht. Der Ausfall der ersten Phase 25 ist durch das "x" verdeutlicht.

|       | [x000] | [x100] | [x110] | [x010] | [x011]  | [x001]  | [x101]  | [x111] |
|-------|--------|--------|--------|--------|---------|---------|---------|--------|
| $U_1$ | 0      | $u_d$  | $u_d$  | 0      | $-u_d$  | $-u_d$  | 0       | 0      |
| $U_2$ | 0      | 0      | $u_d$  | $u_d$  | 0       | $-u_d$  | $-u_d$  | 0      |

Auch für die beiden anderen Fehlerfälle, dass die zweite Phase 28 oder die dritte Phase 31 ausgefallen sind, können vergleichbare Tabellen aufgestellt werden

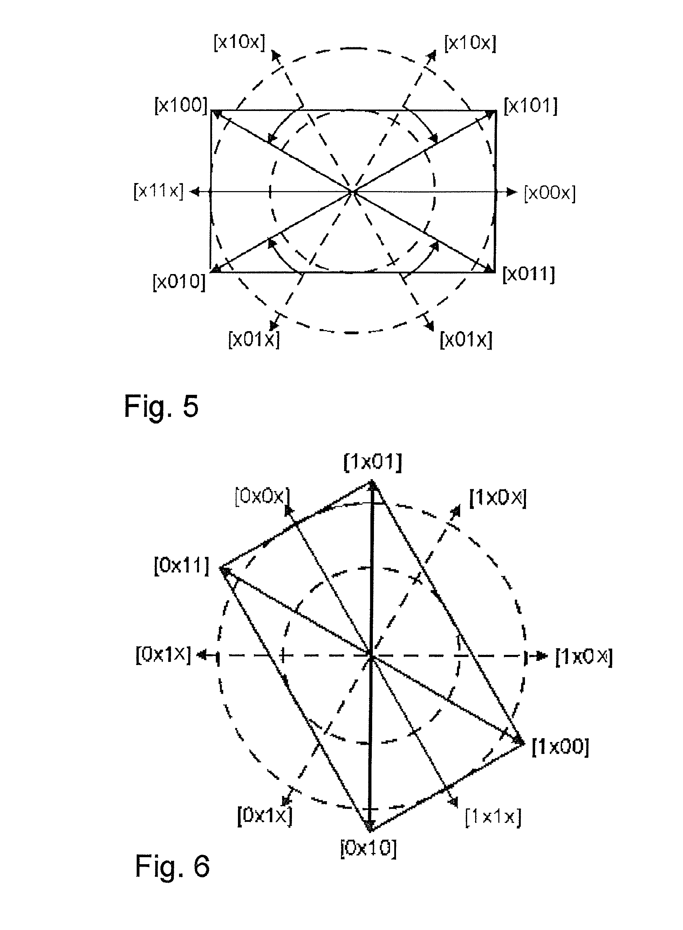

Die Fig. 5 zeigt schematisch eine Raumzeigerkombination für den Ausfall der ersten Phase 25. Von den Schaltzuständen der Tabelle 1 entsprechen jeweils vier den verbliebenen aktiven Basis-Raumzeigern [x10x], [x01 x] ohne Schaltung der ersten Phase 25 und ohne Schaltung der Hilfs-Halbbrücke 33. Durch die Werte "0" bzw. "1" anstatt dem "x" der nicht mehr schaltbaren ersten Phase 25 ergäben sich dabei die insgesamt vier ursprünglichen Basis-Raumzeiger [110x], [010x] [110x], [010x]. Diese verbliebenen aktiven Basis-Raumzeigern [x10x], [x01 x] müssen jeweils um 30° - verglichen mit den ursprünglichen Basis-Raumzeigern, die mit den jeweiligen Phasen assoziiert waren- zu den ursprünglichen Basis-Raumzeigern [x11x], [x00x] der nicht mehr schaltbaren ersten Phase 25 hin verdreht werden, um einen über dem Maschinenumfang konstanten Ständerstrombelag zu gewährleisten, wie durch die Pfeile angedeutet ist. Die resultierenden Kombinationen von Basis-Raumzeigern [x100], [x101], [x011], [x010] des Systems einschließlich der geschalteten Hilfs-Halbbrücke 33, dargestellt in der komplexen Ebene muss der nachfolgenden Formel (1) genügen. Die Formel (2) entspricht dem identischen Fall für den Ausfall der zweiten Phase 28 und die Formel (3) dem Fall für den Ausfall der dritten Phase 31.

$$\left|\underrightarrow{i_S}\right| = \left|\hat{i}_S \cdot \frac{2}{3} \cdot \left(0 + \cos\left(\omega t - \frac{5\pi}{6}\right)e^{-\frac{2\pi}{3}} + \cos\left(\omega t - \frac{7\pi}{6}\right)e^{-\frac{4\pi}{3}}\right)\right| = \text{konst.} \qquad (1)$$

$$\left|\underrightarrow{i_S}\right| = \left|\hat{i}_S \cdot \frac{2}{3} \cdot \left(\cos\left(\omega t + \frac{\pi}{6}\right) + 0 + \cos\left(\omega t - \frac{3\pi}{2}\right)e^{-\frac{4\pi}{3}}\right)\right| = \text{konst.} \qquad (2)$$

$$\left|\underrightarrow{i_S}\right| = \left|\hat{i}_S \cdot \frac{2}{3} \cdot \left(\cos\left(\omega t - \frac{\pi}{6}\right) + \cos\left(\omega t - \frac{\pi}{2}\right)e^{-\frac{2\pi}{3}} + 0\right)\right| = \text{konst.} \qquad (3)$$

Die Projektionen des resultierenden Strombelagsraumzeigers auf die einzelnen Wicklungsachsen als Funktion des örtlichen Winkels stimmen dabei nicht mehr mit den jeweiligen Stromphasoren als Funktion des Winkels einer Grundschwingungsperiode überein. Es resultieren hieraus vier um jeweils zueinander 90° verdrehte Basisraumzeiger für den Strombelag.

Mit dieser angepassten Raumzeigermodulation kann ein überlagertes feldorientiertes Regelungsverfahren unverändert weiter genutzt werden. Es ist einzig die Streckenverstärkung, das heißt das Verhältnis von Ständerstrom in einer einzelnen Phase bzw. von dem Strom in einer Statorwicklung gegenüber dem abgegebenen Antriebsmoment geringer. Der auf diese Weise maximal erzeugbare konstante Spannungsraumzeigerbetrag ohne Übermodulation beträgt statt zuvor $u_d/\sqrt{3}$ nur noch $u_d/3$.

Die Fig. 6 zeigt schematisch eine Raumzeigerkombination für den Ausfall der zweiten Phase 28. Dargestellt sind die vier verbliebenen aktiven Basis-Raumzeigern [1x0x], [0x1x] ohne Schaltung der zweiten Phase 28 und ohne Schaltung der Hilfs-Halbbrücke 33 sowie die ursprünglichen Basis-Raumzeiger [1x1x] und [0x0x] der nicht mehr schaltbaren zweiten Phase 28. Die resultierenden Kombinationen von Basis-Raumzeigern [1x00], [1x01], [0x11], [0x10] des Systems einschließlich der geschalteten Hilfs-Halbbrücke 33, dargestellt in der komplexen Ebene, muss der obigen Formel (2) genügen.

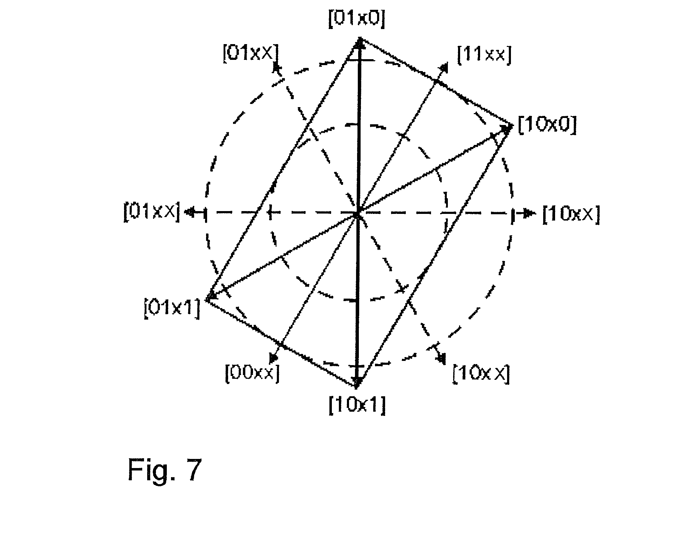

Die Fig. 7 zeigt schematisch eine Raumzeigerkombination für den Ausfall der dritten Phase 31. Dargestellt sind die vier verbliebenen aktiven Basis-Raumzeigern [10xx], [01xx] ohne Schaltung der dritten Phase 31 und ohne Schaltung der Hilfs-Halbbrücke 33 sowie die ursprünglichen Basis-Raumzeiger [11xx] und [00xx] der nicht mehr schaltbaren dritten Phase 31. Die resultierenden Kombinationen von Basis-Raumzeigern [10x0], [10x1], [01x1], [01 x0] des Systems einschließlich der geschalteten Hilfs-Halbbrücke 33, dargestellt in der komplexen Ebene muss der obigen Formel (3) genügen.

**Patentansprüche**

1. Flurförderzeug mit zumindest einem elektrischen Antrieb einer Komponente des Flurförderzeugs (1), wobei der elektrische Antrieb einen Drehstrommotor (18) mit mindestens drei Statorwicklungen (26,29,32), die in dem Betrieb des Drehstrommotors (18) in Sternschaltung geschaltet und mindestens drei Phasen (25,28,31) zugeordnet sind, einen regelbaren Umrichter (17) für die Versorgung der Phasen (25,28,31) mit elektrischer Energie und eine Steuervorrichtung aufweist,
   **dadurch gekennzeichnet,**
   **dass** ein Sternpunkt (34) der Statorwicklungen (26,29,32) mit einer Hilfs-Halbbrücke (33) verbunden ist und die Steuerung bei einem Ausfall oder Fehler in einer Phase (25,28,31) die verbleibenden Phasen (25,28,31) auch mithilfe der Hilfs-Halbbrücke (33) mit elektrischer Energie versorgen kann.

**2.** Flurförderzeug nach Anspruch 1,
**dadurch gekennzeichnet,**
**dass** der Drehstrommotor (18) genau drei Phasen (25,28,31) aufweist, die auf genau drei Statorwicklungen (26,29,32) aufgeteilt sind.

**3.** Flurförderzeug nach Anspruch 1 oder 2,
**dadurch gekennzeichnet,**
**dass** die Hilfs-Halbbrücke (33) in den Umrichter (17) integriert ist.

**4.** Flurförderzeug nach einem der Ansprüche 1 bis 3,
**dadurch gekennzeichnet,**
**dass** der elektrische Antrieb ein Lenkantrieb einer elektrischen Lenkung (23) ist.

**5.** Flurförderzeug nach einem der Ansprüche 1 bis 4,
**dadurch gekennzeichnet,**
**dass** der elektrische Antrieb ein Fahrantrieb des Flurförderzeugs (1) ist.

**6.** Verfahren zum Betrieb eines Flurförderzeugs nach einem der Ansprüche 1 bis 5,
**dadurch gekennzeichnet,**
**dass** bei einem Ausfall einer Phase(25,28,31), insbesondere einem Ausfall eines Leistungshalbleiter (V1,V2,V3,V4,V5,V6) und/oder einer Statorwicklung (26,29,32), durch die Steuerung die Hilfs-Halbbrücke (33) für einen Notbetrieb so angesteuert wird, dass sich ein Drehfeld bildet.

**7.** Verfahren nach Anspruch 6,
**dadurch gekennzeichnet,**
**dass** der Drehstrommotor (18) genau drei Phasen (25,28,31) aufweist, die auf genau drei Statorwicklungen (26,29,32) aufgeteilt sind, und die Steuerung eine feldorientierte Regelung durchführt.

**8.** Verfahren nach Anspruch 7,
**dadurch gekennzeichnet,**
**dass** für die Durchführung der feldorientierte Regelung Ersatz-Basisraumzeiger ([x100], [x101], [x011], [x010]) benutzt werden, die aus der Bedingung einer über den Umfang konstanten Strombelegung der verbleibenden Statorwicklungen (29,32) bestimmt werden.

**9.** Verfahren nach Anspruch 8,
**dadurch gekennzeichnet,**
**dass** die Ersatz-Basisraumzeiger ([x100], [x101], [x011], [x010]) den vier Basis-Raumzeigern ([x10x], [x01 x]) der verbliebenen noch funktionsfähigen Phasen (28,31) entsprechen, die jeweils um $\pi/6$ auf die Basisraumzeiger ([x11x], [x00x]) der ausgefallenen Phase (25) hin gedreht sind.

**10.** Verfahren nach einem der Ansprüche 6 bis 9,
**dadurch gekennzeichnet,**
**dass** in dem Notbetrieb durch die Steuerung eine Regelung des Antriebs mit verringertem Drehmoment erfolgt und/ oder der Notbetrieb durch die Steuerung nur zeitlich begrenzt für eine bestimmte Zeitdauer durchgeführt wird.

**11.** Verfahren nach einem der Ansprüche 6 bis 10,
**dadurch gekennzeichnet,**
**dass** der elektrische Antrieb ein Lenkantrieb einer elektrischen Lenkung (23) ist und in dem Notbetrieb durch die Steuerung bei Stillstand des Flurförderzeugs (1) keine Ansteuerung des Antriebs erfolgt.

**12.** Verfahren nach einem der Ansprüche 6 bis 11,
**dadurch gekennzeichnet,**
**dass** der elektrische Antrieb ein Fahrantrieb des Flurförderzeugs (1) ist und in dem Notbetrieb durch die Steuerung die Höchstgeschwindigkeit und/oder maximale Beschleunigung des Flurförderzeugs begrenzt wird.

Fig. 1

Fig. 2

Fig. 3

Fig. 4

Fig. 5

Fig. 6

10

Fig. 7